# EUROPEAN PATENT SPECIFICATION

(11) **EP 3 906 516 B1**
(45) Date of publication and mention of the grant of the patent: **24.07.2024**
(21) Application number: 20707936.9
(22) Date of filing: 23.01.2020
(51) Int. Cl.: G06Q 10/10

(54) **PREDICTING AND SUPPORTING EMAIL DEFERRAL**
VORHERSAGE UND UNTERSTÜTZUNG VON EMAIL-AUFSCHUB
PRÉDICTION DE ET PRISE EN CHARGE DE REPORT DE COURRIER ÉLECTRONIQUE

(30) Priority: 11.02.2019 US 201962804104 P; 31.10.2019 US 201916670576
(43) Date of publication of application: 10.11.2021
(73) Proprietor: Microsoft Technology Licensing, LLC, Redmond, WA 98052-6399 (US)
(72) Inventor: LIN, Christopher Huai-Hsien, Redmond, Washington 98052-6399 (US); LEE, Chia-Jung, Redmond, Washington 98052-6399 (US); SHOKOUHI, Milad, Redmond, Washington 98052-6399 (US); DUMAIS, Susan, Redmond, Washington 98052-6399 (US); AWADALLAH, Ahmed Hassan, Redmond, Washington 98052-6399 (US); SARRAFZADEH, Bahareh, Redmond, Washington 98052-6399 (US)
(74) Representative: Page White Farrer
(86) International application number: PCT/US2020/014861
(87) International publication number: WO 2020/167443

(56) References cited:
- US-A1- 2010 318 612
- US-A1- 2017 004 408
- US-A1- 2018 309 708

## Description

### BACKGROUND

Email is one of the most popular online activities and remains a major tool for communication and collaboration. It is estimated that 269 billion emails were sent and received per day in 2017, and studies show that information workers tend to spend up to 28% of their time reading and answering email. Email usage has significantly evolved beyond communication to encompass other areas like task management and archiving. Thus, email is being used for more than just communication, and a phenomenon often referred to as "email overload" has been a widely researched area. Many researchers have studied the close tie between people's tasks and their email practices; research has indicated that email activity tends to center around five main areas, including: flow, triage, task management, archive, and retrieve.

Email triage is the process of going through unhandled email and deciding what to do with it. Email triage can quickly become a serious problem for users as the number of unhandled emails grows. During a triage session, users commonly defer emails until a later time to manage overflow. Email deferral is directly related to task management, and occurs because people have insufficient time to take an immediate action on an email or they need to gather information before they can act on a particular email. Studies indicate that users tend to defer responding to 37% of emails that need a reply, and that while around 10% of all messages receive a Reply, a Reply All or a Forward action; 26% of these actions are taken at a later time (not immediately following the first read) indicating the significance of deferral.

The fact that a user defers an email does not imply that the message is less important. A deferred email could be very important and therefore requires careful examination and a well-crafted reply. Alternatively, the email may be not important enough to warrant immediate attention. Deferral may also be a result of other factors unrelated to the message such as a workload of the current user and the device the user is currently using. For example, a common scenario for deferral involves the increasing use of mobile devices for day-to-day task management. Not only does triage play a more prominent role on mobile devices, but users also need to accomplish triage more quickly because of the short, intermittent nature of mobile interactions. Research on smart phone use suggests that mobile users primarily identify what emails to delete and what emails to handle immediately, and defer handling most messages until the user is able to use a larger device.

US2017004408 A1 discloses a generic modelling module that is queried for predicting whether a receiving user will read or not read a received electronic mail message.

US2018309708 A1 discloses a method for reminding a user about un-actioned emails in a mail box, involves directing a reminder to a first user in addition to a second user based on urgency and importance associated with the un-actioned emails, where a first user is identified.

### SUMMARY

Understanding email deferral characteristics, strategies and motivations help to develop new experiences to empower people to perform tasks more efficiently. The ability to accurately predict whether an email is deferred has the potential of significantly improving the email experience. For example, email systems including servers and/or clients may rely on a "deferral and reminder" model to defer emails and then remind users about emails that they have deferred or even forgotten about, thereby reducing the amount of effort the user may need to spend to re-find emails and reducing the chance of the user from missing an important email to act upon. In accordance with examples of the present disclosure, systems and methods are provided directed to predicting when an email has been deferred and then providing a deferred email follow-up. In accordance with examples of the present disclosure, systems and methods are provided directed to deferring email based on email and user characteristics. Qualitative and quantitative analyses may be utilized to determine characterizations of email deferred by one or more users as well as a most desired time for providing to a user a reminder to follow-up or otherwise act on the deferred email.

The aforementioned problem is solved by the features of the independent claims. Preferred embodiments are defined in the dependent claims.

### BRIEF DESCRIPTION OF THE DRAWINGS

Non-limiting and non-exhaustive examples are described with reference to the following Figures.
Figure 1 illustrates an example system for predicting when an email has been deferred and then providing a deferred email follow-up in accordance with examples of the present disclosure.
Figure 2 depicts additional details of an email deferral prediction module and a deferred email follow-up module in accordance with examples of the present disclosure.
Figure 3 depicts additional details of email deferral and scheduled follow-up notifications in accordance with examples of the present disclosure.
Figure 4 depicts additional details of email deferral and reordered scheduled follow-up notifications in accordance with examples of the present disclosure.
Figure 5 details of a method for predicting when an email has been deferred and then providing a deferred email follow-up in accordance with examples of the present disclosure.
Figure 6 is a block diagram illustrating physical components of a computing device with which aspects of the disclosure may be practiced.
Figures 7A and 7B illustrate details of a computing device with which aspects of the disclosure may be practiced.
Figure 8 illustrates at least one aspect of an architecture of a system for processing data in accordance with examples of the present disclosure.

### DETAILED DESCRIPTION

In the following detailed description, references are made to the accompanying drawings that form a part hereof, and in which are shown by way of illustrations specific embodiments or examples. These aspects may be combined, other aspects may be utilized, and structural changes may be made without departing from the present disclosure. Embodiments may be practiced as methods, systems or devices. Accordingly, embodiments may take the form of a hardware implementation, an entirely software implementation, or an implementation combining software and hardware aspects. The following detailed description is therefore not to be taken in a limiting sense, and the scope of the present disclosure is defined by the appended claims and their equivalents.

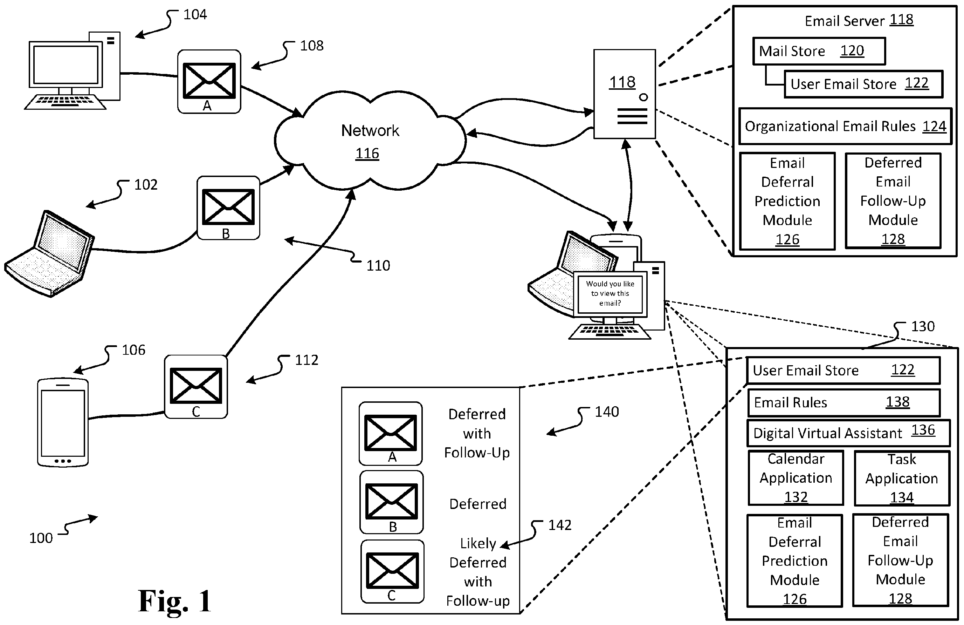

Fig. 1 depicts a system 100 for predicting when an email has been deferred and then providing a deferred email follow-up in accordance with examples of the present disclosure. An email may originate from one or more devices, such as, for example, a laptop 102, desktop 104, or mobile device 106. Emails A, B, and/or C (108, 110, and 112 respectively) may be destined for a first recipient's (or first user's) email address. Emails A, B, and/or C (108, 110, and 112 respectively) may travel through a network 116 and arrive at an email server 118, where the email server 118 may include a mail store 120, or mail storage area, for storing email for one or more users. As one example, a first user may have a user email store 122 in which the first user's emails are stored or otherwise located. The user email store 122 additionally may store, coordinate, and/or otherwise make available to the first user, capabilities related to email management, time management (such as an appointment and/or time entries in a calendar), task management capabilities, and/or journaling capabilities. An example email server 118 may include, but is not limited to Microsoft Exchange. In some examples, the email server 118 may be distributed across one or more servers and/or be located at least partially at a cloud storage and/or as part of a cloud computing offering.

An email, such as 108, 110, and/or 112, may be initially received at the email server 118 and then processed in accordance with organizational email rules 124. For example, organizational email rules 124 may determine what, if any, additional email processing is to occur on the email 108, 110, and/or 112. In one example, additional processing may include archiving, security filtering, and the like. Further, user specific email rules 138 may determine if a particular action is to occur based on one or more characteristics of the email. For example, if an email is received from a particular sender, the user specific email rules 138 may cause the email to be forwarded to another email address, marked in some manner to distinguish such email from other emails, and/or be directed to one or more user created folders. In accordance with examples of the present disclosure, based on one or more characteristics of the email, the email server 118 may generate a deferral prediction 140 at the email deferral prediction module 126 as to whether the email is likely to be deferred and/or whether a user is likely to revisit such email at a later point in time. For example, deferral predictions 140 may be based on, but not limited to, an amount of time and/or effort required by the user to respond to the email, a sender of the email, a relationship of the sender to the user, a perceived importance of the sender, a location of the sender, an intended responsiveness image portrayed by the user, a number of recipients included in the email, an urgency of the email (such as marked important, urgent, or otherwise), an estimated workload of the user, and/or an estimated impact of workload created by the email. In accordance with examples of the present disclosure, the email deferral prediction module 126 may generate a prediction indication and associate the prediction indication with the particular email. For example, for an email determined to be "likely deferred," the email deferral prediction module 126 may associate a "likely deferred" prediction with the email. For example, data, such as metadata, associated with the email may be modified to indicate that the email is likely deferred. Alternatively, or in addition, a status of the email may be configured to indicate "likely deferred." Moreover, the email deferral prediction module 126 may further determine a likelihood associated with a user responding to the email or otherwise taking action based on the email; that is, there may be a high possibility that a user may take some action with respect to an email, whether the email is deferred or not. For example, an email may be deferred but may not require a particular action to be taken. In some instances, an email may be deferred but may also generally need a particular action to occur, such as a reply, reply-all, forward action, reading the email, opening attachments, following links, etc., and/or the performance of a different task. It should be understood that the email deferral prediction module 126 may make a deferral and/or response prediction before and/or after a user has viewed the email. In some instances, an email may be presented to the user prior to the deferral action; in other instances, an email may be routed to another location, tagged with a label, or otherwise indicated as deferred before the user has viewed the email.

The email server 118 may also include a deferred email follow-up module 128. The deferred email follow-up module 128 may determine a best manner, mode, time, or otherwise to have the user follow-up with the deferred email. For example, the deferred email follow-up module 128 may cause an appointment and/or reminder on a calendar application to be created, where the appointment or reminder is set or otherwise configured based on an estimated workload of the user. As another example, a reminder may be generated and added to a calendar application at 3:00 PM to follow-up with a specific deferred email. In some instances, a reminder may be generated and added to a calendar application at 3:00 PM to follow-up with multiple deferred emails. In some instances, the deferred email follow-up module 128 may cause an entry to be made to a task manager, journal, or other application in which a user may utilize to organize tasks and/or time. In some examples, the deferred email follow-up module 128 may interact with a digital virtual assistant, such as Microsoft Cortana for instance; the digital virtual assistant may associate a reminder with the deferred email and may determine an optimal or otherwise best mode and manner for reminding the user to follow-up and/or act on the deferred email. While the email deferral prediction module 126 and the deferred email follow-up module 128 have been discussed as being executed by an email server 118, such modules 126/128 may be executed at an email client 130 and/or at least partially executed at an email client 130. That is, the email deferral prediction module 126 may process an email at a client application, such as an email client 130. Moreover, the deferred email follow-up module 128 may at least partially reside at the email client 130. Further, the calendar application 132, task application 134, and/or digital virtual assistant 136 depicted as residing at the email client 130 may reside at the email server 118, a cloud computing platform, or otherwise. For example, the email client 130 may correspond to or otherwise be implemented as a web client such that a user may access email, deferred email, or otherwise via a web browser.

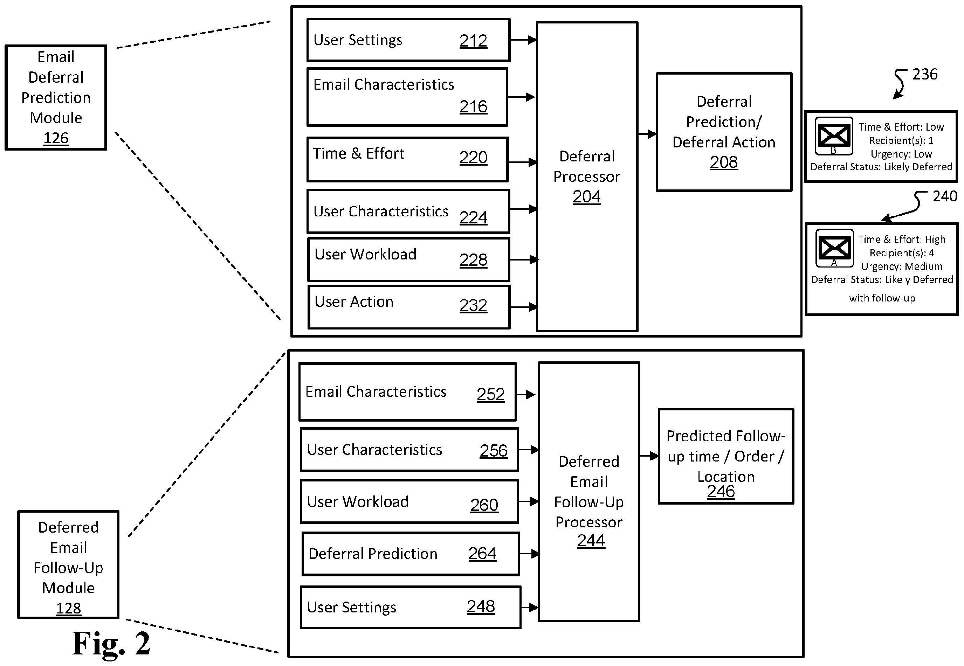

Fig. 2 depicts additional non-limiting details of the email deferral prediction module 126 and the deferred email follow-up module 128 in accordance with examples of the present disclosure. More specifically, the email deferral prediction module 126 may include a deferral processor 204 configured to generate a deferral prediction and/or deferral action 208 based on one or more inputs. The deferral processor 204 may implement one or more machine learning algorithms to predict such email deferral. A user setting 212, such as a configuration setting or explicit deferral action, may be utilized by the deferral processor 204 to make an email deferral prediction 208. As another example, one or more email characteristics 216, such as but not limited to, a length of email, text size of email, whether the email includes attachments, a number of attachments, an identity of the sender, a number of recipients, relationships of the sender and/or recipients to the user, a time zone of the sender, an urgency or importance marking, may be utilized by the deferral processor to make an email deferral prediction. As another example, an estimated amount of time and effort 220 needed for handling the email may be utilized by the deferral processor 204 to make an email deferral prediction 208. As another example, one or more user characteristics 224, such as but not limited to, how many emails a user receives on average per day, a location of the user, a device the user is using (e.g., mobile, desktop, client, etc.), a deferral strategy previously utilized by the user, whether the user is in a meeting, and/or a physical characteristic of the user (e.g., heart rate, an amount of sleep, blood glucose level, alertness level, average context switching time) may be utilized by the deferral processor 204 to make an email deferral prediction 208. As another example, a user workload 228 based on, for example but not limited to, appointments, tasks, time of day, project deadlines, user's schedule, other users' schedules, and/or a number applications currently open at user's computing device, may be utilized by the deferral processor 204 to make an email deferral prediction 208. As another example, a user action 232, such as but not limited to, whether the user viewed the email, an amount of time spent viewing the email, an open email window, a number of revisits to the email, a folder the user filed the email in, whether the user filed the email in a known non-deferral email folder, whether the user filed the email in a known deferral email folder, and/or whether the user partially replied to an email (for instance, replied to or otherwise forwarded the mail to another recipient or a recipient of the email) may be utilized by the deferral processor 204 to make an email deferral prediction 208. In some examples, an email may be determined to be likely deferred when the email is unread or otherwise unviewed by the user. In some examples, an email may be determined to be likely deferred after the email has been marked as read or otherwise viewed by the user.

The deferral processor 204 may be trained, using user specific data and/or organizational specific data to make one or more email deferral predictions 208. For instance, email logs may be utilized to obtain one or more feature sets utilized in the classification of deferred emails. Such features and classifiers, may be utilized to train a machine learning algorithm to make email deferral predictions 236/240. A machine learning model may be trained based on aggregate data from many users, personal data from a single user, or a combination of both allowing the model to capture generic behavioral patterns but also providing personalized predictions tailored to the user personal behavioral patterns. In some instances, one or more neural network models may be utilized to make the email deferral prediction 236/240.

For example, a likelihood value corresponding to a likelihood that an email may be deferred may be based on an analysis using logistic regression of previous emails by the user and/or by a group of users. As one non-limiting example, a logistic regression performs a prediction modeling process based on emails having the same or similar characteristics as other emails which result in either deferral or non-deferral in order to calculate a likelihood value corresponding to a likelihood of deferral. Accordingly, the aforementioned modeling process may include training a model (e.g., a logistic regression model) based on the commonalities between emails. Such commonalities may include, but are not limited to the email characteristics 216, time & effort 2209, user characteristics 224, user workload 228, user action 232, user settings 212, and/or the email topic and content. Thereafter, the trained model may analyze emails to predict a likelihood of deferral. The email deferral prediction module 126 may use any one of various known modeling techniques to perform the modeling. For example, according to various exemplary embodiments, the email deferral prediction module 126 may apply a statisticsbased machine learning model such as the logistic regression model to determine a likelihood of deferral. Regression coefficients of the regression model may be estimated using maximum likelihood or learned through a supervised learning technique from the email characteristics 216, time & effort 2209, user characteristics 224, user workload 228, user action 232, user settings 212, and/or the email topic and content. Accordingly, once the appropriate regression coefficients are determined, the features included in a feature vector (e.g., data associated with each of the email characteristics 216, time & effort 2209, user characteristics 224, user workload 228, user action 232, user settings 212, and/or the email topic and content, may be plugged into the logistic regression model in order to predict the probability that a deferral event occurs. In other words, provided a feature vector including various email characteristics 216, time & effort 2209, user characteristics 224, user workload 228, user action 232, user settings 212, and/or the email topic and content, the feature vector may be applied to a logistic regression model to determine the probability that the email may be deferred. The email deferral prediction module 126 may use various other modeling techniques understood by those skilled in the art. For example, other modeling techniques may include other machine learning models such as a Naive Bayes model, a support vector machines (SVM) model, a decision trees model, and a neural network model, all of which are understood by those skilled in the art.

According to various embodiments described above, the feature vector including various email characteristics 216, time & effort 2209, user characteristics 224, user workload 228, user action 232, user settings 212, and/or the email topic and content may be used for the purposes of both training the model (for generating and refining a model and/or the coefficients of a model) and using the trained model (for making predictions). For example, if the modeling module is utilizing a logistic regression model (as described above), then regression coefficients of the logistic regression model may be learned through a supervised learning technique from the feature vector including various email characteristics 216, time & effort 2209, user characteristics 224, user workload 228, user action 232, user settings 212, and/or the email topic and content. Accordingly, in one non-limiting example, the email deferral prediction module 126 may operate in a training mode by assembling the feature vector including various email characteristics 216, time & effort 2209, user characteristics 224, user workload 228, user action 232, user settings 212, and/or the email topic and content into feature vectors. For the purposes of training the system, the system generally needs both positive examples for emails being deferred and negative examples where emails are not deferred. The feature vectors may then be utilized to refine regression coefficients for the logistic regression model. For example, statistical learning based on the Stochastic Gradient Descent (SGD) technique may be utilized to refine the regression coefficients for a logistic regression model. Thereafter, once the regression coefficients are determined, the deferral processor 204 may operate to perform inferences based on the trained model (including the trained model coefficients) on a feature vector representing emails. For example, as a non-limiting example, the deferral processor 204 may be configured to predict the likelihood that an email will be deferred based on various email characteristics 216, time & effort 2209, user characteristics 224, user workload 228, user action 232, user settings 212, and/or the email topic and content compared to the contributions or weights of these data that were utilized to train the model. In some embodiments, if the probability that the email will be deferred is greater than a specific threshold (e.g., 0.6, 0.75, etc.), then the deferral processor 204 may classify that particular email as a deferred email.

According to various exemplary embodiments, the process of training or retraining the model based on the various email characteristics 216, time & effort 2209, user characteristics 224, user workload 228, user action 232, user settings 212, and/or the email topic and content may be performed periodically at regular time intervals (e.g., once a month), or may be performed at irregular time intervals, random time intervals, continuously, etc. Since information on the email deferral prediction module 126 may change over time, it is understood that the model itself may change over time (based on the various email characteristics 216, time & effort 2209, user characteristics 224, user workload 228, user action 232, user settings 212, and/or the email topic and content being used to train the model).

In some instances, the deferral processor 204 may create a deferral action 208, such as moving an email to a specific folder and/or location, obscuring the email from a user's view, or otherwise performing a deferral action with or without the user's knowledge.

The deferred email follow-up module 128 may include a deferred email follow-up processor 244 configured to determine a best manner and/or mode 246 (for example, a predicted follow-up time, an order of follow-up, and/or location for follow-up) for providing an indication to a user to follow-up with a deferred email. The deferred email follow-up processor 244 may implement one or more machine learning algorithms to determine such manner and/or mode 246. For example, a user setting 248, such as a configuration setting or explicit reminder action (for example, "always create calendar entries" or "add item to a task list") may be utilized by the deferred email follow-up processor 244 to determine a mode and/or manner for following up with a deferred email. As another example, one or more email characteristics 252, such as but not limited to, an identity of the sender, a number of recipients, relationships of the sender and/or recipients to the user, a time zone of the sender, an urgency or importance marking, whether the text indicated a "reply by" time, the topic of the email message, the content of the email message, and/or that some other action needed to occur by a specific time, may be utilized by the deferred email follow-up processor 244 to determine a mode and/or manner for following up with a deferred email. As another example, an estimated amount of time and effort needed for handling the email may be utilized by the deferred email follow-up processor 244 to determine a mode and/or manner for following up with a deferred email. As another example, one or more user characteristics 256, such as but not limited to, how many emails a user receives on average per day, a location of the user, a device the user is using (e.g., mobile, desktop, client, etc.), a deferral strategy previously utilized by the user, whether the user is in a meeting, and/or a physical characteristic of the user (e.g., heart rate, an amount of sleep, blood glucose level, alertness level, average context switching time) may be utilized by the deferred email follow-up processor 244 to determine a mode and/or manner for following up with a deferred email. As another example, a user workload 260 based on, for example, but not limited to, appointments, tasks, time of day, project deadlines, user's schedule, other users' schedules, and/or a number applications currently open at user's computing device, may be utilized by the deferred email follow-up processor 244 to determine a mode and/or manner for following up with a deferred email. As another example, a user action, such as but not limited to, whether the user viewed the email, an amount of time spent viewing the email, an open email window, a number of revisits to the email, what folder the user filed the email in, whether the user filed the email in a known non-deferral email folder, whether the user filed the email in a known deferral email folder, and/or whether the user partially replied to an email (for instance, replied to or otherwise forwarded the mail to another recipient or a recipient of the email) may be utilized by the deferred email follow-up processor 244 to determine a mode and/or manner for following up with a deferred email. As another example, a deferral prediction 264 and/or likelihood of the user performing a strong action may be utilized by the deferred email follow-up processor 244 to determine a mode and/or manner for following up with a deferred email.

Similar to the deferral processor 204, the deferred email follow-up processor 244 may be trained, using user specific data and/or organizational specific data to make one or more determinations for providing an indication, notification, or otherwise to the user to remind the user to follow-up with a deferred email. For instance, email logs, calendar logs, task logs, and the like may be utilized to obtain one or more feature sets utilized in the classification of deferred emails and further a type of an action and when an action occurred on the deferred emails. Such features and classifiers, may be utilized to train a machine learning algorithm to make determinations as to a manner and/or mode 246 for indicating to the user that the user should follow-up with an email. In some instances, one or more neural network models may be utilized to make the mode and/or manner predictions.

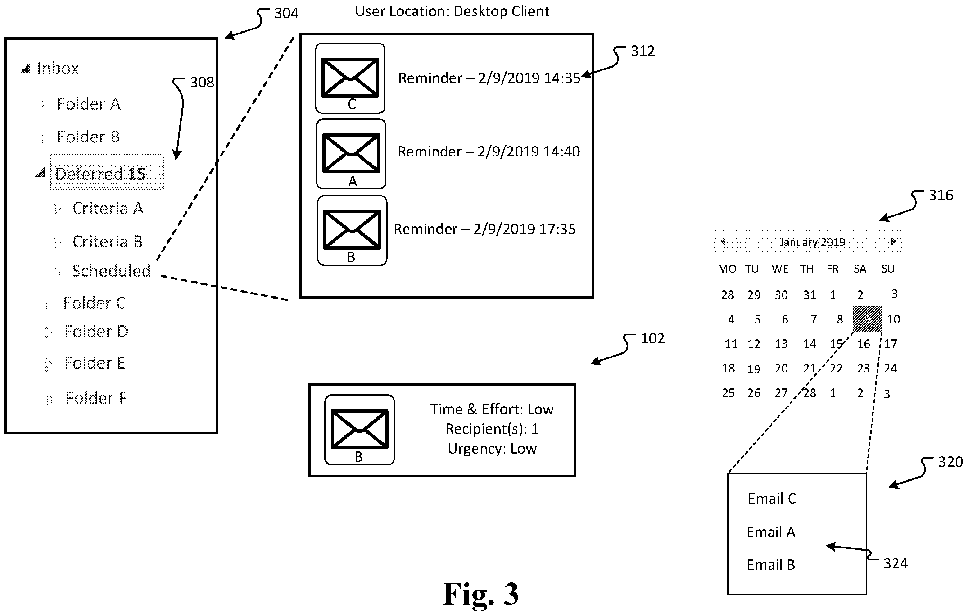

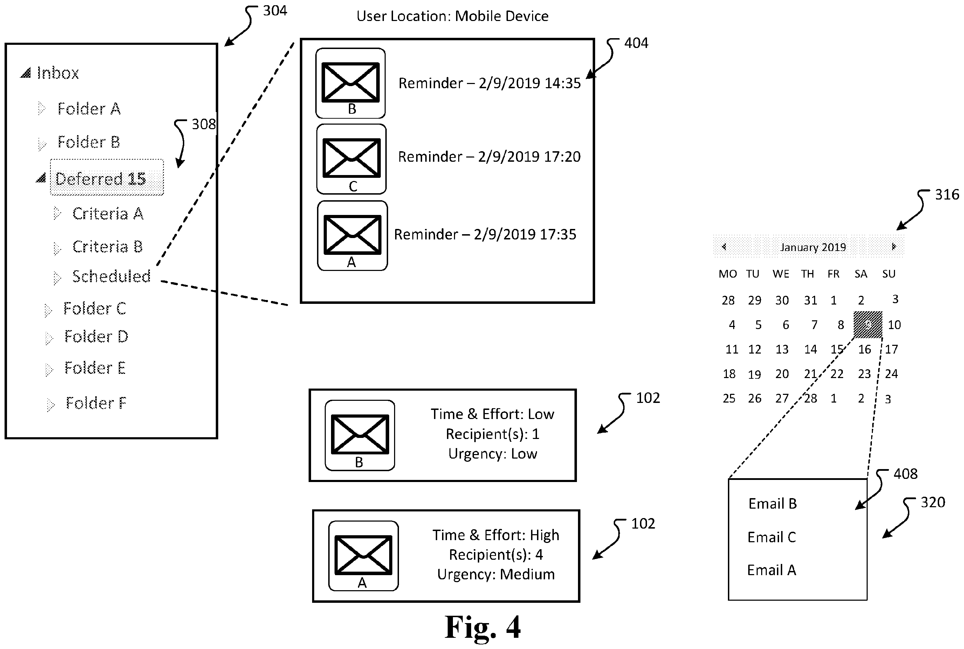

Fig. 3 provides a depiction of deferred email with scheduled follow-up notifications in accordance with examples of the present disclosure. For example, a user's inbox 304 may include a deferred emails folder 308, where the deferred emails folder 308 may include emails associated with a deferral prediction made by the email deferral prediction module 1268. In some instances, the deferred email may be further sorted according to one or more criteria (such as urgency, estimated time and effort, etc.). The deferred email may include an indication that such email has likely been deferred and/or that a reminder has been scheduled. The reminder may include a reminder time 312 for instance, indicating when the user may be reminded of the email. In some examples, the user's calendar 316 may indicate that deferred emails 320 need to be reviewed and may further schedule such review time in the user's calendar. In some instances, additional deferral information may be provided for each email, for example, one or more characteristics utilized by the email deferral prediction module to make such prediction. In some instances, an order 324 in which the emails are to be revisited may be modified. In some instances, a date and/or time indication reminding the user to take some action or review the email may be modified. For example, Fig. 3 illustrates that an order 324 corresponding to C, A, and B may be established. Such order 324 may be established based on one or more of the inputs to the deferred email follow-up processor 244 as previously discussed. Fig. 4 depicts that the order 404 in which the indications and/or reminders are provided to the user may be different. In this case, the order may be B, C, and A. Such order 404 may be established based on one or more of the inputs to the deferred email follow-up module 128 as previously discussed. For example, an input to the deferred email follow-up module 128 may indicate that the user is using a mobile device instead of a desktop device (for example, a user switched from a mobile device to a desktop device); the order 408 may change in response to the indication indicating the user is using a mobile device vs a desktop device.

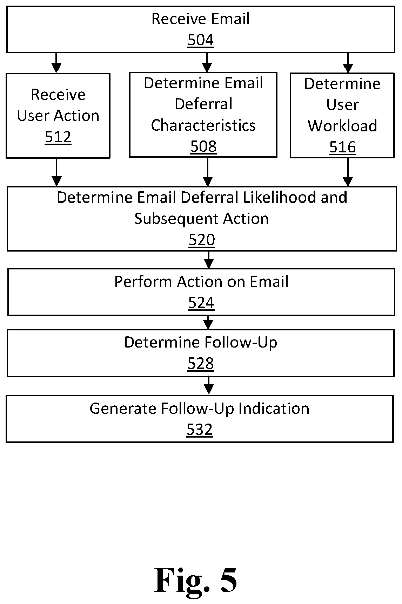

Figure 5 depicts details of a method 500 for predicting when an email has been deferred and then providing a deferred email follow-up in accordance with examples of the present disclosure. A general order for the steps of the method 500 is shown in Figure 5. Generally, the method 500 starts at 504 and ends at 532. The method 500 may include more or fewer steps or may arrange the order of the steps differently than those shown in Figure 5. The method 500 can be executed as a set of computer-executable instructions executed by a computer system and encoded or stored on a computer readable medium. Further, the method 500 can be performed by gates or circuits associated with a processor, Application Specific Integrated Circuit (ASIC), a field programmable gate array (FPGA), a system on chip (SOC), or other hardware device. Hereinafter, the method 500 shall be explained with reference to the systems, components, modules, software, data structures, user interfaces, etc. described in conjunction with Figures 1-4.

The method starts at 504, where an email may be received, at which point email deferral characteristics may be determined at 508. For example, the email characteristics, time & effort, and user characteristics may be determined and provided to the deferral processor 204 for example. Similarly, the user workload and/or user action may be determined at 516 and then provided to the deferral processor 204. The deferral processor 204 may determine an email deferral likelihood at 520. Based on the email deferral likelihood, an action may be performed on the email at 524. For example, an action of moving, tagging, and/or associating the email with a deferral prediction may occur. Based on the deferral prediction, a manner and mode for providing an indication to the user to follow-up with the deferred email is determined at 528. For example, a reminder within a calendar application may be set; a task may be added to a task list; and/or the email may be moved to a specific folder. Accordingly, a follow-up indication and/or notification may be generated at 532 notifying the user that an email is to be reviewed and/or handled.

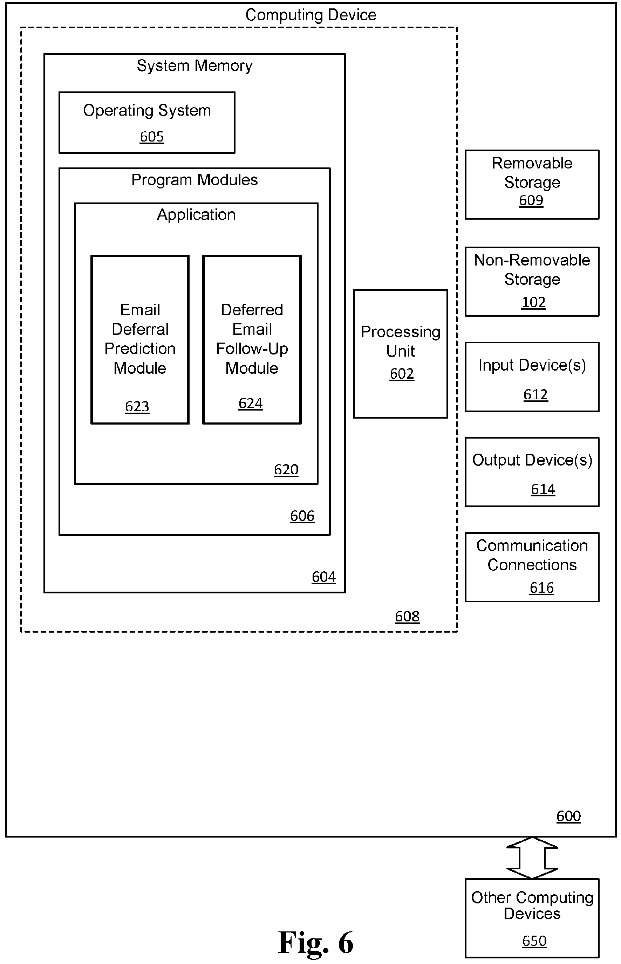

Figures 6-8 and the associated descriptions provide a discussion of a variety of operating environments in which aspects of the disclosure may be practiced. However, the devices and systems illustrated and discussed with respect to Figures 6-8 are for purposes of example and illustration and are not limiting of a vast number of computing device configurations that may be utilized for practicing aspects of the disclosure, described herein.

Figure 6 is a block diagram illustrating physical components (e.g., hardware) of a computing device 600 with which aspects of the disclosure may be practiced. The computing device components described below may be suitable for the computing devices described above. In a basic configuration, the computing device 600 may include at least one processing unit 602 and a system memory 604. Depending on the configuration and type of computing device, the system memory 604 may comprise, but is not limited to, volatile storage (e.g., random access memory), non-volatile storage (e.g., read-only memory), flash memory, or any combination of such memories.

The system memory 604 may include an operating system 605 and one or more program modules 606 suitable for running software application 620, such as one or more components supported by the systems described herein. As examples, system memory 604 may store the email deferral prediction module 623 and/or the deferred email follow-up module 624. The operating system 605, for example, may be suitable for controlling the operation of the computing device 600.

Furthermore, embodiments of the disclosure may be practiced in conjunction with a graphics library, other operating systems, or any other application program and is not limited to any particular application or system. This basic configuration is illustrated in Figure 6 by those components within a dashed line 608. The computing device 600 may have additional features or functionality. For example, the computing device 600 may also include additional data storage devices (removable and/or non-removable) such as, for example, magnetic disks, optical disks, or tape. Such additional storage is illustrated in Figure 6 by a removable storage device 609 and a non-removable storage device 610.

As stated above, a number of program modules and data files may be stored in the system memory 604. While executing on the at least one processing unit 602, the program modules 606 (e.g., application 620) may perform processes including, but not limited to, the aspects, as described herein. Other program modules that may be used in accordance with aspects of the present disclosure may include electronic mail and contacts applications, word processing applications, spreadsheet applications, database applications, slide presentation applications, drawing or computer-aided application programs, etc.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. For example, embodiments of the disclosure may be practiced via a system-on-a-chip (SOC) where each or many of the components illustrated in Figure 6 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to the capability of client to switch protocols may be operated via application-specific logic integrated with other components of the computing device 600 on the single integrated circuit (chip). Embodiments of the disclosure may also be practiced using other technologies capable of performing logical operations such as, for example, AND, OR, and NOT, including but not limited to mechanical, optical, fluidic, and quantum technologies. In addition, embodiments of the disclosure may be practiced within a general purpose computer or in any other circuits or systems.

The computing device 600 may also have one or more input device(s) 612 such as a keyboard, a mouse, a pen, a sound or voice input device, a touch or swipe input device, etc. The output device(s) 614 such as a display, speakers, a printer, etc. may also be included. The aforementioned devices are examples and others may be used. The computing device 600 may include one or more communication connections 616 allowing communications with other computing devices 650. Examples of suitable communication connections 616 include, but are not limited to, radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 1004, the removable storage device 609, and the non-removable storage device 610 are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 600. Any such computer storage media may be part of the computing device 600. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

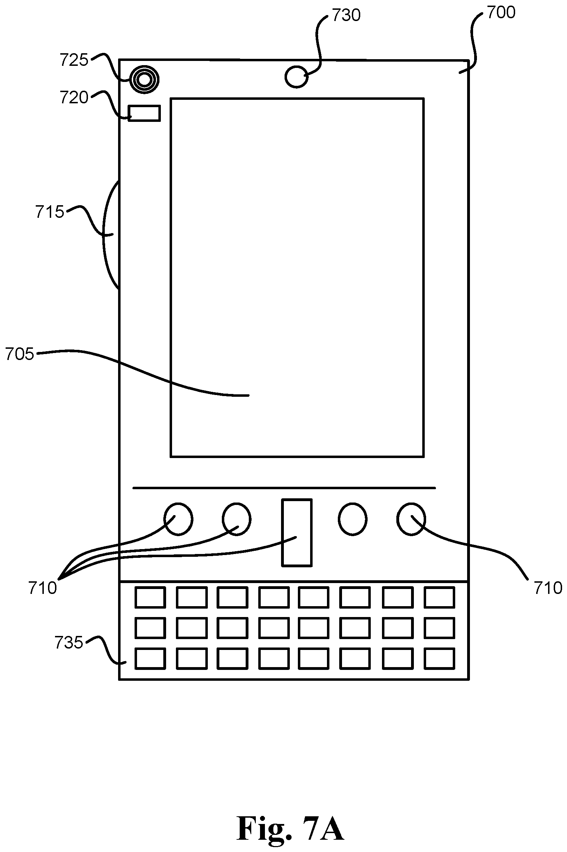

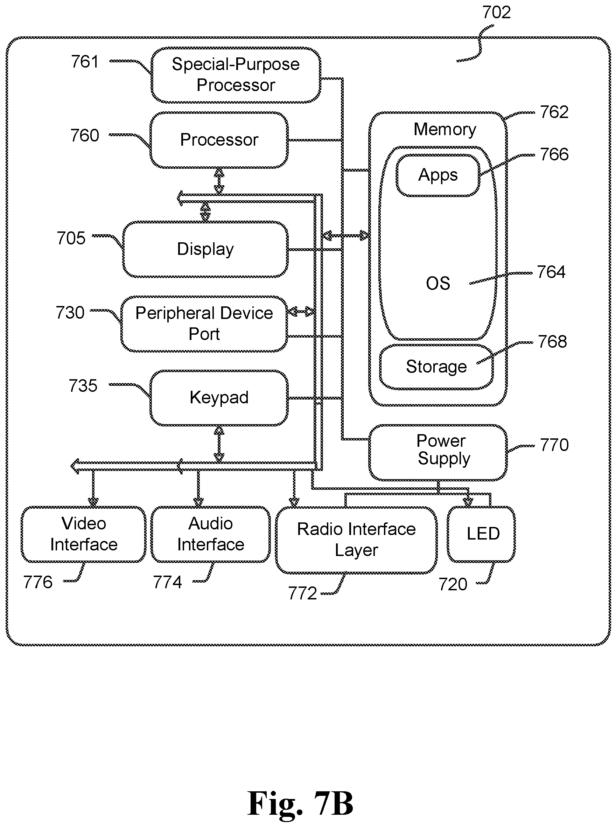

Figures 7A and 7B illustrate a computing device or mobile computing device 700, for example, a mobile telephone, a smart phone, wearable computer (such as a smart watch), a tablet computer, a laptop computer, and the like, with which aspects of the disclosure may be practiced. In some aspects, the client (e.g., computing system 104A-E) may be a mobile computing device. With reference to Figure 7A, one aspect of a mobile computing device 700 for implementing the aspects is illustrated. In a basic configuration, the mobile computing device 700 is a handheld computer having both input elements and output elements. The mobile computing device 700 typically includes a display 705 and one or more input buttons 710 that allow the user to enter information into the mobile computing device 700. The display 705 of the mobile computing device 700 may also function as an input device (e.g., a touch screen display). If included, an optional side input element 715 allows further user input. The side input element 715 may be a rotary switch, a button, or any other type of manual input element. In alternative aspects, mobile computing device 700 may incorporate more or less input elements. For example, the display 705 may not be a touch screen in some aspects. In yet another alternative aspect, the mobile computing device 700 is a portable phone system, such as a cellular phone. The mobile computing device 700 may also include an optional keypad 735. Optional keypad 735 may be a physical keypad or a "soft" keypad generated on the touch screen display. In various aspects, the output elements include the display 705 for showing a graphical user interface (GUI), a visual indicator 9720 (e.g., a light emitting diode), and/or an audio transducer 725 (e.g., a speaker). In some aspects, the mobile computing device 700 incorporates a vibration transducer for providing the user with tactile feedback. In yet another aspect, the mobile computing device 700 incorporates input and/or output ports, such as an audio input (e.g., a microphone j ack), an audio output (e.g., a headphone j ack), and a video output (e.g., a HDMI port) for sending signals to or receiving signals from an external source.

Figure 7B is a block diagram illustrating the architecture of one aspect of computing device, a server, or a mobile computing device. That is, the computing device 700 can incorporate a system (e.g., an architecture) 702 to implement some aspects. The system 702 can implemented as a "smart phone" capable of running one or more applications (e.g., browser, e-mail, calendaring, contact managers, messaging clients, games, and media clients/players). In some aspects, the system 702 is integrated as a computing device, such as an integrated personal digital assistant (PDA) and wireless phone.

One or more application programs 766 may be loaded into the memory 762 and run on or in association with the operating system 764. Examples of the application programs include phone dialer programs, e-mail programs, personal information management (PIM) programs, word processing programs, spreadsheet programs, Internet browser programs, messaging programs, and so forth. The system 702 also includes a nonvolatile storage area 768 within the memory 762. The non-volatile storage area 768 may be used to store persistent information that should not be lost if the system 702 is powered down. The application programs 766 may use and store information in the non-volatile storage area 768, such as e-mail or other messages used by an e-mail application, and the like. A synchronization application (not shown) also resides on the system 702 and is programmed to interact with a corresponding synchronization application resident on a host computer to keep the information stored in the non-volatile storage area 768 synchronized with corresponding information stored at the host computer. As should be appreciated, other applications may be loaded into the memory 762 and run on the mobile computing device 700 described herein (e.g., search engine, extractor module, relevancy ranking module, answer scoring module, etc.).

The system 702 has a power supply 770, which may be implemented as one or more batteries. The power supply 770 might further include an external power source, such as an AC adapter or a powered docking cradle that supplements or recharges the batteries.

The system 702 may also include a radio interface layer 772 that performs the function of transmitting and receiving radio frequency communications. The radio interface layer 772 facilitates wireless connectivity between the system 702 and the "outside world," via a communications carrier or service provider. Transmissions to and from the radio interface layer 772 are conducted under control of the operating system 764. In other words, communications received by the radio interface layer 772 may be disseminated to the application programs 766 via the operating system 764, and vice versa.

The visual indicator 720 may be used to provide visual notifications, and/or an audio interface 774 may be used for producing audible notifications via the audio transducer 725. In the illustrated configuration, the visual indicator 720 is a light emitting diode (LED) and the audio transducer 725 is a speaker. These devices may be directly coupled to the power supply 770 so that when activated, they remain on for a duration dictated by the notification mechanism even though the processor 760 and other components might shut down for conserving battery power. The LED may be programmed to remain on indefinitely until the user takes action to indicate the powered-on status of the device. The audio interface 774 is used to provide audible signals to and receive audible signals from the user. For example, in addition to being coupled to the audio transducer 725, the audio interface 774 may also be coupled to a microphone to receive audible input, such as to facilitate a telephone conversation. In accordance with aspects of the present disclosure, the microphone may also serve as an audio sensor to facilitate control of notifications, as will be described below. The system 702 may further include a video interface 976 that enables an operation of an on-board camera 730 to record still images, video stream, and the like.

A mobile computing device 700 implementing the system 702 may have additional features or functionality. For example, the mobile computing device 700 may also include additional data storage devices (removable and/or non-removable) such as, magnetic disks, optical disks, or tape. Such additional storage is illustrated in Figure 7B by the non-volatile storage area 968.

Data/information generated or captured by the mobile computing device 700 and stored via the system 702 may be stored locally on the mobile computing device 700, as described above, or the data may be stored on any number of storage media that may be accessed by the device via the radio interface layer 772 or via a wired connection between the mobile computing device 700 and a separate computing device associated with the mobile computing device 700, for example, a server computer in a distributed computing network, such as the Internet. As should be appreciated such data/information may be accessed via the mobile computing device 700 via the radio interface layer 772 or via a distributed computing network. Similarly, such data/information may be readily transferred between computing devices for storage and use according to well-known data/information transfer and storage means, including electronic mail and collaborative data/information sharing systems.

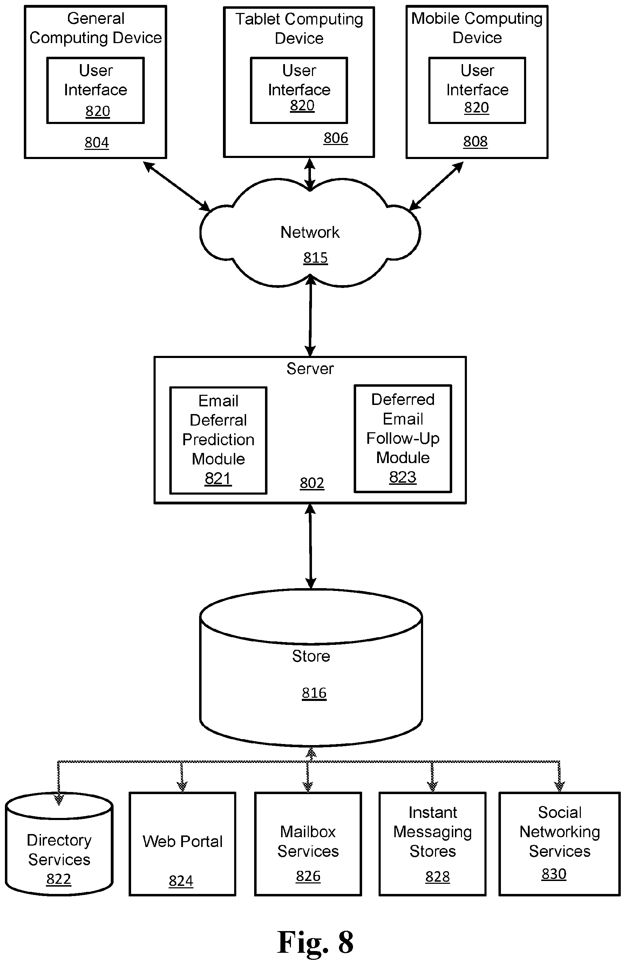

Figure 8 illustrates one aspect of the architecture of a system for processing data received at a computing system from a remote source, such as a personal computer 804, tablet computing device 806, or mobile computing device 808, as described above. Content displayed at server device 1202 may be stored in different communication channels or other storage types. For example, various documents may be stored using a directory service 822, a web portal 824, a mailbox service 826, an instant messaging store 828, or a social networking site 830.

An email deferral prediction module 821 and deferred email follow-up module 823 may be employed by a client that communicates with server device 802, and/or the email deferral prediction module 821 and deferred email follow-up module 823 which may be employed by server device 802. The server device 802 may provide data to and from a client computing device such as a personal computer 804, a tablet computing device 806 and/or a mobile computing device 808 (e.g., a smart phone) through a network 815. By way of example, the computer system described above may be embodied in a personal computer 804, a tablet computing device 806 and/or a mobile computing device 808 (e.g., a smart phone). Any of these embodiments of the computing devices may obtain content from the store 816, in addition to receiving graphical data useable to be either preprocessed at a graphic-originating system, or post-processed at a receiving computing system.

FIG. 8 illustrates an exemplary mobile computing device 800 that may execute one or more aspects disclosed herein. In addition, the aspects and functionalities described herein may operate over distributed systems (e.g., cloud-based computing systems), where application functionality, memory, data storage and retrieval and various processing functions may be operated remotely from each other over a distributed computing network, such as the Internet or an intranet. User interfaces and information of various types may be displayed via on-board computing device displays or via remote display units associated with one or more computing devices. For example, user interfaces and information of various types may be displayed and interacted with on a wall surface onto which user interfaces and information of various types are projected. Interaction with the multitude of computing systems with which embodiments of the invention may be practiced include, keystroke entry, touch screen entry, voice or other audio entry, gesture entry where an associated computing device is equipped with detection (e.g., camera) functionality for capturing and interpreting user gestures for controlling the functionality of the computing device, and the like.

The phrases "at least one," "one or more," "or," and "and/or" are open-ended expressions that are both conjunctive and disjunctive in operation. For example, each of the expressions "at least one of A, B and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B and C together.

The term "a" or "an" entity refers to one or more of that entity. As such, the terms "a" (or "an"), "one or more," and "at least one" can be used interchangeably herein. It is also to be noted that the terms "comprising," "including," and "having" can be used interchangeably.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

Any of the steps, functions, and operations discussed herein can be performed continuously and automatically.

The exemplary systems and methods of this disclosure have been described in relation to computing devices. However, to avoid unnecessarily obscuring the present disclosure, the preceding description omits a number of known structures and devices. This omission is not to be construed as a limitation. Specific details are set forth to provide an understanding of the present disclosure. It should, however, be appreciated that the present disclosure may be practiced in a variety of ways beyond the specific detail set forth herein.

Furthermore, while the exemplary aspects illustrated herein show the various components of the system collocated, certain components of the system can be located remotely, at distant portions of a distributed network, such as a LAN and/or the Internet, or within a dedicated system. Thus, it should be appreciated, that the components of the system can be combined into one or more devices, such as a server, communication device, or collocated on a particular node of a distributed network, such as an analog and/or digital telecommunications network, a packet-switched network, or a circuit-switched network. It will be appreciated from the preceding description, and for reasons of computational efficiency, that the components of the system can be arranged at any location within a distributed network of components without affecting the operation of the system.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire, and fiber optics, and may take the form of acoustic or light waves, such as those generated during radio-wave and infra-red data communications.

While the flowcharts have been discussed and illustrated in relation to a particular sequence of events, it should be appreciated that changes, additions, and omissions to this sequence can occur without materially affecting the operation of the disclosed configurations and aspects.

A number of variations and modifications of the disclosure can be used. It would be possible to provide for some features of the disclosure without providing others.

In yet another configurations, the systems and methods of this disclosure can be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this disclosure. Exemplary hardware that can be used for the present disclosure includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

In yet another configuration, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this disclosure is dependent on the speed and/or efficiency requirements of the system, the particular function, and the particular software or hardware systems or microprocessor or microcomputer systems being utilized.

In accordance with at least one example, a system for providing an indication to a user based on a determination as to whether an email is likely to be deferred is provided. The system may include a processor and memory. The memory may include instructions which when executed by the processor, causes the processor to determine whether an email is likely to be deferred by a user, perform at least one action on the email determined likely to be deferred, determine a mode for providing an indication to the user to follow-up with the email determined likely to be deferred, and cause an indication specific to the email determined likely to be deferred to be provided to the user.

At least one aspect of the above example may include where the mode for providing an indication to the user to follow-up with the email determined likely to be deferred includes at least one of configuring a task, configuring a reminder, configuring a calendar entry, and configuring a notification window. At least one aspect of at least one of the above examples and/or aspects may include where the mode for providing an indication to the user to follow-up with the email determined likely to be deferred is based on a device associated with the user. At least one aspect of at least one of the above examples and/or aspects may include where the at least one action includes at least one of moving the email from a first folder to a second folder, associating a deferral status with the email, and determining a likelihood that the user will respond to the email. At least one aspect of at least one of the above examples and/or aspects may include where the instructions cause the processor to determine that the email is likely to be deferred by the user based on at least one of a characteristic of the email, one or more recipients of the email, an email sender, an amount of work and/or effort associated with the email, a deferral action taken by the user, or a current workload associated with the user. At least one aspect of at least one of the above examples and/or aspects may include where the determining whether an email is likely to be deferred is performed using a machine learning model trained to determine whether an email is likely to be deferred by the user. At least one aspect of at least one of the above examples and/or aspects may include where the machine learning model is trained utilizing feature vectors derived from emails associated with a plurality of users.

In accordance with at least one example, a method is provided. The method may include receiving an email, determining that the received email is likely to be deferred by a user, performing at least one action on the email determined likely to be deferred, determining a mode for providing an indication to the user to follow-up with the email determined likely to be deferred, and causing an indication specific to the email determined likely to be deferred to be provided to the user. At least one aspect of at least one of the above examples and/or aspects may include determining that the received email is likely to be deferred by the user when the email has an unread status. At least one aspect of at least one of the above examples and/or aspects may include where the mode for providing an indication to the user to follow-up with the email determined likely be deferred includes at least one of configuring a task, configuring a reminder, configuring a calendar entry, and configuring a notification window. At least one aspect of at least one of the above examples and/or aspects may include where the mode for providing an indication to the user to follow-up with the email determined likely to be deferred is based on a device associated with the user. At least one aspect of at least one of the above examples and/or aspects may include scheduling review time in a calendar of the user, wherein the review time is based on the email determined likely be deferred. At least one aspect of at least one of the above examples and/or aspects may include determining that an email is likely to be deferred using a machine learning model trained to determine whether an email is likely to be deferred by the user. At least one aspect of at least one of the above examples and/or aspects may include determining that the email is likely to be deferred is based on at least one of a characteristic of the email, one or more recipients of the email, an email sender, an amount of work and/or effort associated with the email, a deferral action taken by the user, or a current workload associated with the user. At least one aspect of at least one of the above examples and/or aspects may include determining that a plurality of emails are likely to be deferred by the user, and causing an indication specific to each email of the plurality of emails to be provided to the user in an order different from that which the plurality of emails were received. At least one aspect of at least one of the above examples and/or aspects may include where the machine learning model is trained utilizing feature vectors derived from emails associated with a plurality of users.

In accordance with at least one example, a method is provided. The method may include receiving a plurality of emails, determining that one or more emails of the plurality of emails are likely to be deferred by a user, performing at least one action on the one or more emails of the plurality of emails, for each email of the one or more emails, determining a mode for providing an indication to the user to follow-up with the email, and for each email of the one or more emails, causing an indication specific to the email to be provided to the user. At least one aspect of at least one of the above examples and/or aspects may include determining that an email of the one or more emails is to be deferred when the email is unread. At least one aspect of at least one of the above examples and/or aspects may include determining a priority status associated with each email of the one or more emails, and ordering the indication specific to each email of the one or more emails in accordance with the priority status. At least one aspect of at least one of the above examples and/or aspects may include where the one or more emails are added to at least one of a task management application and/or a calendar application. At least one aspect of at least one of the above examples and/or aspects may include where the indication specific to each email of the one or more emails is associated with a time entry in a calendar application and the time entry changes depending on a user location. At least one aspect of at least one of the above examples and/or aspects may include where the determining whether an email is likely to be deferred is performed using a machine learning model trained to determine whether an email is likely to be deferred by the user. At least one aspect of at least one of the above examples and/or aspects may include where the machine learning model is trained utilizing feature vectors derived from emails associated with a plurality of users.

In accordance with at least one example, a machine learning model trained to perform one or more aspects of the above examples and/or aspects may be provided. In accordance with at least one example, a machine learning model trained to determine whether an email is likely to be deferred is provided. The machine learning model may determine whether an email is likely to be deferred by a user. The machine learning model may perform at least one action on the email determined likely to be deferred. The machine learning model may determine a mode for providing an indication to the user to follow-up with the email determined likely to be deferred. The machine learning model may cause an indication specific to the email determined likely to be deferred to be provided to the user.

In yet another configuration, the disclosed methods may be partially implemented in software that can be stored on a storage medium, executed on programmed generalpurpose computer with the cooperation of a controller and memory, a special purpose computer, a microprocessor, or the like. In these instances, the systems and methods of this disclosure can be implemented as a program embedded on a personal computer such as an applet, JAVA^{®} or CGI script, as a resource residing on a server or computer workstation, as a routine embedded in a dedicated measurement system, system component, or the like. The system can also be implemented by physically incorporating the system and/or method into a software and/or hardware system.

The disclosure is not limited to standards and protocols if described. Other similar standards and protocols not mentioned herein are in existence and are considered to be included in the present disclosure. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present disclosure.

The present disclosure, in various configurations and aspects, includes components, methods, processes, systems and/or apparatus substantially as depicted and described herein, including various combinations, subcombinations, and subsets thereof. Those of skill in the art will understand how to make and use the systems and methods disclosed herein after understanding the present disclosure. The present disclosure, in various configurations and aspects, includes providing devices and processes in the absence of items not depicted and/or described herein or in various configurations or aspects hereof, including in the absence of such items as may have been used in previous devices or processes, e.g., for improving performance, achieving ease, and/or reducing cost of implementation.

## Claims

1. A system (100) for providing an indication to a user based on a determination as to whether a received email (108, 110, 112) is likely to be deferred, the system comprising:
a processor (602, 760); and
memory (604, 762) including instructions which when executed by the processor (602, 760), causes the processor (602, 760) to implement a trained deferral processor (204) and a trained email follow-up processor (244):
wherein the deferral processor (204) is configured to determine whether the received email (108, 110, 112) is likely to be deferred by the user and perform at least one deferral action on the email (108, 110, 112) determined likely to be deferred, the deferral processor (204) having been trained based on an analysis of previous emails by the user and/or by a group of users;
wherein the email follow-up processor (244) is configured to determine a mode for providing an indication to the user to follow-up with the email determined likely to be deferred, determine a reminder time (312) for the indication, and cause an indication specific to the email (108, 110, 112) determined likely to be deferred to be provided to the user at the determined reminder time (312), the email follow-up processor (244) having been trained by obtaining, from one or more of email logs, calendar logs, and task logs, a type of action and when an action occurred on previously deferred emails.

2. The system (100) of claim 1, wherein the mode for providing an indication to the user to follow-up with the email determined likely to be deferred includes at least one of configuring a task, configuring a reminder, configuring a calendar entry, and configuring a notification window.

3. The system (100) of claim 2, wherein the mode for providing an indication to the user to follow-up with the email (108, 110, 112) determined likely to be deferred is based on a device associated with the user.

4. The system (100) of claim 1, wherein the at least one deferral action includes at least one of moving the email (108, 110, 112) from a first folder (304) to a second folder (308), associating a deferral status with the email (108, 110, 112), and determining a likelihood that the user will respond to the email (108, 110, 112).

5. The system (100) of claim 1, wherein the instructions cause the processor (602, 706) to determine that the email (108, 110, 112) is likely to be deferred by the user based on at least one of a characteristic of the email (108, 110, 112), one or more recipients of the email (108, 110, 112), an email sender, an amount of work and/or effort associated with the email (108, 110, 112), a deferral action taken by the user, or a current workload associated with the user.

6. The system (100) of claim 1, wherein the determining whether an email (108, 110, 112) is likely to be deferred is performed using a machine learning model trained to determine whether an email (108, 110, 112) is likely to be deferred by the user.

7. The system (100) of claim 6, wherein the machine learning model is trained utilizing feature vectors derived from emails associated with a plurality of users.

8. A method comprising:
receiving an email (108, 110, 112);
determining, by a trained deferral processor (204), that the received email (108, 110, 112) is likely to be deferred by a user and performing at least one deferral action on the email (108, 110, 112) determined likely to be deferred, the deferral processor (204) having been trained based on an analysis of previous emails by the user and/or by a group of users;
determining, by a trained email follow-up processor (244), a mode for providing an indication to the user to follow-up with the email determined likely to be deferred, determining a reminder time (312) for the indication, and causing an indication specific to the email determined likely to be deferred to be provided to the user at the determined reminder time (312), the email follow-up processor (244) having been trained by obtaining, from one or more of email logs, calendar logs, and task logs, a type of action and when an action occurred on previously deferred emails.

9. The method of claim 8, wherein the mode for providing an indication to the user to follow-up with the email (108, 110, 112) determined likely be deferred includes at least one of configuring a task, configuring a reminder, configuring a calendar entry, and configuring a notification window.

10. The method of claim 8, wherein the mode for providing an indication to the user to follow-up with the email (108, 110, 112) determined likely to be deferred is based on a device associated with the user.

11. The method of claim 8, further comprising scheduling review time in a calendar of the user, wherein the review time is based on the email (108, 110, 112) determined likely be deferred.

12. The method of claim 8, further comprising determining that an email (108, 110, 112) is likely to be deferred using a machine learning model trained to determine whether an email is likely to be deferred by the user.

13. The method of claim 8, wherein determining that the email is likely to be deferred is based on at least one of a characteristic of the email (108, 110, 112), one or more recipients of the email (108, 110, 112), an email sender, an amount of work and/or effort associated with the email (108, 110, 112), a deferral action taken by the user, or a current workload associated with the user.

14. A method comprising:
receiving a plurality of emails (108, 110, 112);
determining, by a trained deferral processor (204), that one or more emails (108, 110, 112) of the plurality of emails (108, 110, 112) are likely to be deferred by a user utilizing a machine learning model trained, based on an analysis of previous emails by the user and/or by a group of users, and performing at least one deferral action on the one or more emails determined likely to be deferred of the plurality of emails (108, 110, 112);
for each email of the one or more email:
determined likely to be deferred, determining, by a trained email follow-up processor (244), a mode for providing an indication to the user to follow-up with the email, determining a reminder time (312) for the indication, and, for each email of the one or more email:
determined likely to be deferred, causing an indication specific to the email to be provided to the user at the determined reminder time (312), the email follow-up processor (244) having been trained by obtaining, from one or more of email logs, calendar logs, and task logs, a type of action and when an action occurred on previously deferred emails.

15. The method of claim 14, further comprising determining that an email (108, 110, 112) of the one or more emails (108, 110, 112) is to be deferred when the email (108, 110, 112) is unread.

## Patentansprüche

1. System (100) zum Bereitstellen eines Hinweises an einen Benutzer, basierend auf einer Bestimmung, ob eine empfangene E-Mail (108, 110, 112) wahrscheinlich aufgeschoben werden wird, wobei das System Folgendes umfasst:
einen Prozessor (602, 760); und
einen Speicher (604, 762) mit Anweisungen, die bei Ausführung durch den Prozessor (602, 760) bewirken, dass der Prozessor (602, 760) einen trainierten Aufschub-Prozessor (204) und einen trainierten E-Mail-Nachverfolgungs-Prozessor (244) implementiert;
wobei der Aufschub-Prozessor (204) dazu konfiguriert ist, zu bestimmen, ob die empfangene E-Mail (108, 110, 112) wahrscheinlich vom Benutzer aufgeschoben werden wird, und mindestens eine Aufschub-Handlung für die als wahrscheinlich aufzuschiebend bestimmte E-Mail (108, 110, 112) auszuführen, wobei der Aufschub-Prozessor (204) anhand einer Analyse vorheriger E-Mails des Benutzers und/oder einer Benutzergruppe trainiert wurde;
wobei der E-Mail-Nachverfolgungs-Prozessor (244) dazu konfiguriert ist, einen Modus zum Bereitstellen eines Hinweises an den Benutzer zum Nachverfolgen der als wahrscheinlich aufzuschiebend bestimmten E-Mail zu bestimmen, einen Erinnerungszeitpunkt (312) für den Hinweis zu bestimmen und zu veranlassen, dass dem Benutzer zum bestimmten Erinnerungszeitpunkt (312) ein für die als wahrscheinlich aufzuschiebend bestimmte E-Mail (108, 110, 112) spezifischer Hinweis bereitgestellt wird, wobei der E-Mail-Nachverfolgungs-Prozessor (244) vorab als Training aus einem oder mehreren Protokollen von E-Mails, Kalendern und Aufgaben eine Handlungsart und den Zeitpunkt einer Handlung bezüglich zuvor aufgeschobener E-Mails ermittelte.

2. System (100) nach Anspruch 1, wobei der Modus zum Bereitstellen eines Hinweises an den Benutzer zum Nachverfolgen der als wahrscheinlich aufzuschiebend bestimmten E-Mail mindestens eines der folgenden Elemente beinhaltet: Konfigurieren einer Aufgabe, Konfigurieren einer Erinnerung, Konfigurieren eines Kalendereintrags und Konfigurieren eines Benachrichtigungsfensters.

3. System (100) nach Anspruch 2, wobei der Modus zum Bereitstellen eines Hinweises an den Benutzer zum Nachverfolgen der als wahrscheinlich aufzuschiebend bestimmten E-Mail (108, 110, 112) auf einer mit dem Benutzer verbundenen Vorrichtung basiert.

4. System (100) nach Anspruch 1, wobei die mindestens eine Aufschub-Handlung mindestens eines der folgenden Elemente beinhaltet: Verschieben der E-Mail (108, 110, 112) von einem ersten Ordner (304) in einen zweiten Ordner (308), Zuordnen eines Aufschub-Status zur E-Mail (108, 110, 112) und Bestimmen einer Wahrscheinlichkeit, dass der Benutzer auf die E-Mail (108, 110, 112) antworten wird.

5. System (100) nach Anspruch 1, wobei die Anweisungen den Prozessor (602, 706) veranlassen, zu bestimmen, dass die E-Mail (108, 110, 112) wahrscheinlich vom Benutzer aufgeschoben werden wird, nämlich anhand mindestens eines der folgenden Elemente: eine Eigenschaft der E-Mail (108, 110, 112), ein oder mehrere Empfänger der E-Mail (108, 110, 112), ein E-Mail-Absender, eine mit der E-Mail (108, 110, 112) verbundene Arbeitsmenge und/oder ein verbundener Aufwand, eine vom Benutzer ausgeführte Aufschub-Handlung oder eine aktuelle, mit dem Benutzer verbundene Arbeitslast.

6. System (100) nach Anspruch 1, wobei das Bestimmen, ob eine E-Mail (108, 110, 112) wahrscheinlich aufgeschoben werden wird, mithilfe eines Machine-Learning-Modells erfolgt, das trainiert ist, um zu bestimmen, ob eine E-Mail (108, 110, 112) wahrscheinlich vom Benutzer aufgeschoben werden wird.

7. System (100) nach Anspruch 6, wobei das Machine-Learning-Modell mithilfe von Merkmalsvektoren trainiert wird, die aus E-Mails abgeleitet sind, die mit einer Vielzahl von Benutzern verbunden sind.

8. Verfahren, umfassend:
Empfangen einer E-Mail (108, 110, 112);
Bestimmen durch einen trainierten Aufschub-Prozessor (204), dass die empfangene E-Mail (108, 110, 112) wahrscheinlich von einem Benutzer aufgeschoben werden wird, und Durchführen mindestens einer Aufschub-Handlung für die als wahrscheinlich aufzuschiebend bestimmte E-Mail (108, 110, 112), wobei der Aufschub-Prozessor (204) anhand einer Analyse vorheriger E-Mails des Benutzers und/oder einer Benutzergruppe trainiert wurde;
Bestimmen durch einen trainierten E-Mail-Nachverfolgungs-Prozessor (244) eines Modus zum Bereitstellen eines Hinweises an den Benutzer zum Nachverfolgen der als wahrscheinlich aufzuschiebend bestimmten E-Mail, Bestimmen eines Erinnerungszeitpunktes (312) für den Hinweis und Veranlassen, dass dem Benutzer zum bestimmten Erinnerungszeitpunkt (312) ein für die als wahrscheinlich aufzuschiebend bestimmte E-Mail spezifischer Hinweis bereitgestellt wird, wobei der E-Mail-Nachverfolgungs-Prozessor (244) vorab als Training aus einem oder mehreren Protokollen von E-Mails, Kalendern und Aufgaben eine Handlungsart und den Zeitpunkt einer Handlung bezüglich zuvor aufgeschobener E-Mails ermittelte.

9. Verfahren nach Anspruch 8, wobei der Modus zum Bereitstellen eines Hinweises an den Benutzer zum Nachverfolgen der als wahrscheinlich aufzuschiebend bestimmten E-Mail (108, 110, 112) mindestens eines der folgenden Elemente beinhaltet: Konfigurieren einer Aufgabe, Konfigurieren einer Erinnerung, Konfigurieren eines Kalendereintrags und Konfigurieren eines Benachrichtigungsfensters.

10. Verfahren nach Anspruch 8, wobei der Modus zum Bereitstellen eines Hinweises an den Benutzer zum Nachverfolgen der als wahrscheinlich aufzuschiebend bestimmten E-Mail (108, 110, 112) auf einer mit dem Benutzer verbundenen Vorrichtung basiert.

11. Verfahren nach Anspruch 8, ferner umfassend das Planen eines Prüfzeitpunkts in einem Kalender des Benutzers, wobei der Prüfzeitpunkt auf der als wahrscheinlich aufzuschiebend bestimmten E-Mail (108, 110, 112) basiert.

12. Verfahren nach Anspruch 8, ferner umfassend das Bestimmen, dass eine E-Mail (108, 110, 112) wahrscheinlich aufgeschoben werden wird, mithilfe eines Machine-Learning-Modells, das trainiert ist, um zu bestimmen, ob eine E-Mail wahrscheinlich vom Benutzer aufgeschoben werden wird.

13. Verfahren nach Anspruch 8, wobei das Bestimmen, dass die E-Mail wahrscheinlich aufgeschoben werden wird, auf mindestens einem der folgenden Elemente basiert: eine Eigenschaft der E-Mail (108, 110, 112), ein oder mehrere Empfänger der E-Mail (108, 110, 112), ein E-Mail-Absender, eine mit der E-Mail (108, 110, 112) verbundene Arbeitsmenge und/oder ein verbundener Aufwand, eine vom Benutzer ausgeführte Aufschub-Handlung oder eine aktuelle, mit dem Benutzer verbundene Arbeitslast.

14. Verfahren, umfassend:
Empfangen einer Vielzahl von E-Mails (108, 110, 112);
Bestimmen durch einen trainierten Aufschub-Prozessor (204), dass eine oder mehrere E-Mails (108, 110, 112) aus der Vielzahl von E-Mails (108, 110, 112) wahrscheinlich von einem Benutzer aufgeschoben werden wird, mithilfe eines Machine-Learning-Modells, das anhand einer Analyse vorheriger E-Mails des Benutzers und/oder einer Benutzergruppe trainiert wurde, und Durchführen mindestens einer Aufschub-Handlung für die eine oder mehreren als wahrscheinlich aufzuschiebend bestimmten E-Mails aus der Vielzahl von E-Mails (108, 110, 112);
für jede E-Mail der einen oder mehreren als wahrscheinlich aufzuschiebend bestimmten E-Mails das Bestimmen durch einen trainierten Aufschub-Prozessor (244) eines Modus zum Bereitstellen eines Hinweises an den Benutzer zum Nachverfolgen der E-Mail, Bestimmen eines Erinnerungszeitpunktes (312) für den Hinweis, und für jede E-Mail der einen oder mehreren als wahrscheinlich aufzuschiebend bestimmten E-Mails das Veranlassen, dass dem Benutzer zum bestimmten Erinnerungszeitpunkt (312) ein für die E-Mail spezifischer Hinweis bereitgestellt wird, wobei der E-Mail-Nachverfolgungs-Prozessor (244) vorab als Training aus einem oder mehreren Protokollen von E-Mails, Kalendern und Aufgaben eine Handlungsart und den Zeitpunkt einer Handlung bezüglich zuvor aufgeschobener E-Mails ermittelte.

15. Verfahren nach Anspruch 14, ferner umfassend das Bestimmen, dass eine E-Mail (108, 110, 112) der einen oder mehreren E-Mails (108, 110, 112) aufzuschieben ist, wenn die E-Mail (108, 110, 112) ungelesen ist.

## Revendications

1. Système (100) pour fournir une indication à un utilisateur sur la base d'une détermination quant à savoir si un courrier électronique reçu (108, 110, 112) est susceptible d'être différé, le système comprenant :
un processeur (602, 760) ; et
une mémoire (604, 762) comprenant des instructions qui, lorsqu'elles sont exécutées par le processeur (602, 760), amènent le processeur (602, 760) à mettre en oeuvre un processeur de report entraîné (204) et un processeur de suivi de courrier électronique entraîné (244) :
dans lequel le processeur de report (204) est configuré pour déterminer si le courrier électronique reçu (108, 110, 112) est susceptible d'être différé par l'utilisateur et effectuer au moins une action de report sur le courrier électronique (108, 110, 112) déterminé comme susceptible d'être différé, le processeur de report (204) ayant été formé sur la base d'une analyse de courriers électroniques précédents par l'utilisateur et/ou par un groupe d'utilisateurs ;
dans lequel le processeur de suivi de courrier électronique (244) est configuré pour déterminer un mode permettant de fournir une indication à l'utilisateur pour effectuer un suivi avec le courrier électronique déterminé susceptible d'être différé, déterminer une heure de rappel (312) pour l'indication et provoquer une indication spécifique au courrier électronique (108, 110, 112) déterminé susceptible d'être différé pour être fournie à l'utilisateur à l'heure de rappel déterminée (312), le processeur de suivi du courrier électronique (244) ayant été entraîné en obtenant, auprès d'un ou plusieurs journaux de courrier électronique, de journaux de calendrier et de journaux de tâches, un type d'action et le moment où une action s'est produite sur des courriers électroniques précédemment différés.

2. Système (100) selon la revendication 1, dans lequel le mode pour fournir une indication à l'utilisateur de donner suite au courrier électronique déterminé comme étant susceptible d'être différé comprend au moins l'un parmi la configuration d'une tâche, la configuration d'un rappel, la configuration d'une entrée de calendrier et la configuration d'une fenêtre de notification.

3. Système (100) selon la revendication 2, dans lequel le mode pour fournir une indication à l'utilisateur de donner suite au courrier électronique (108, 110, 112) déterminé comme susceptible d'être différé est basé sur un dispositif associé à l'utilisateur.

4. Système (100) selon la revendication 1, dans lequel l'au moins une action de report comprend au moins une consistant à déplacer le courrier électronique (108, 110, 112) d'un premier dossier (304) vers un second dossier (308), associant un statut de report avec le courrier électronique (108, 110, 112), et déterminer une probabilité que l'utilisateur réponde au courrier électronique (108, 110, 112).

5. Système (100) selon la revendication 1, dans lequel les instructions amènent le processeur (602, 706) à déterminer que le courrier électronique (108, 110, 112) est susceptible d'être différé par l'utilisateur sur la base d'au moins une caractéristique du courrier électronique (108, 110, 112), un ou plusieurs destinataires du courrier électronique (108, 110, 112), un expéditeur de courrier électronique, une quantité de travail et/ou d'effort associé au courrier électronique (108, 110, 112), une action de report entreprise par l'utilisateur ou une charge de travail actuelle associée à l'utilisateur.

6. Système (100) selon la revendication 1, dans lequel la détermination si un courrier électronique (108, 110, 112) est susceptible d'être différé est effectué à l'aide d'un modèle d'apprentissage automatique entraîné pour déterminer si un courrier électronique (108, 110, 112) est susceptible d'être différé par l'utilisateur.

7. Système (100) selon la revendication 6, dans lequel le modèle d'apprentissage automatique est formé en utilisant des vecteurs de caractéristiques dérivés de courriers électroniques associés à une pluralité d'utilisateurs.

8. Procédé comprenant :
recevoir un courrier électronique (108, 110, 112) ;
déterminer, par un processeur de report entraîné (204), que le courrier électronique reçu (108, 110, 112) est susceptible d'être différé par un utilisateur et effectuer au moins une action de report sur le courrier électronique (108, 110, 112) déterminé comme susceptible d'être différé, le processeur de report (204) ayant été formé sur la base d'une analyse de courriers électroniques précédents par l'utilisateur et/ou par un groupe d'utilisateurs ;
déterminer, par un processeur de suivi de courrier électronique entraîné (244), un mode pour fournir une indication à l'utilisateur de donner suite au courrier électronique déterminé susceptible d'être différé, déterminer une heure de rappel (312) pour l'indication, et provoquer une indication spécifique au courrier électronique déterminé susceptible d'être différé pour être fournie à l'utilisateur à l'heure de rappel déterminée (312), le processeur de suivi de courrier électronique (244) ayant été formé en obtenant, à partir d'un ou plusieurs journaux de courrier électronique, des journaux de calendrier et les journaux de tâches, un type d'action et le moment où une action s'est produite sur les courriers électroniques précédemment différés.

9. Procédé selon la revendication 8, dans lequel le mode pour fournir une indication à l'utilisateur de donner suite au courrier électronique (108, 110, 112) déterminé comme susceptible d'être différé comprend au moins l'une des étapes suivantes : configurer une tâche, configurer un rappel, configurer une entrée de calendrier et configurer une fenêtre de notification.

10. Procédé selon la revendication 8, dans lequel le mode pour fournir une indication à l'utilisateur de donner suite au courrier électronique (108, 110, 112) déterminé comme susceptible d'être différé est basé sur un dispositif associé à l'utilisateur.

11. Procédé selon la revendication 8, comprenant en outre la planification d'une heure de révision dans un calendrier de l'utilisateur, dans lequel l'heure de révision est basée sur le courrier électronique (108, 110, 112) déterminé comme susceptible d'être différé.

12. Procédé selon la revendication 8, comprenant en outre déterminer qu'un courrier électronique (108, 110, 112) est susceptible d'être différé à l'aide d'un modèle d'apprentissage automatique entraîné pour déterminer si un courrier électronique est susceptible d'être différé par l'utilisateur.

13. Procédé selon la revendication 8, dans lequel la détermination du fait que le courrier électronique est susceptible d'être différé est basée sur au moins une caractéristique parmi une caractéristique du courrier électronique (108, 110, 112), un ou plusieurs destinataires du courrier électronique (108, 110, 112), un expéditeur de courrier électronique, une quantité de travail et/ou d'effort associé au courrier électronique (108, 110, 112), une action de report entreprise par l'utilisateur, ou une charge de travail actuelle associée à l'utilisateur.

14. Procédé comprenant :
recevoir une pluralité de courrier électroniques (108, 110, 112) ;
déterminer, par un processeur de report entraîné (204), qu'un ou plusieurs courriers électroniques (108, 110, 112) parmi la pluralité de courriers électroniques (108, 110, 112) sont susceptibles d'être différés par un utilisateur utilisant un modèle d'apprentissage automatique entraîné, basé sur une analyse de courriers électroniques précédents par l'utilisateur et/ou par un groupe d'utilisateurs, et effectuer au moins une action de report sur le ou les courriers électroniques déterminés susceptibles d'être différés parmi la pluralité de courriers électroniques (108, 110, 112) ;
pour chaque courrier électronique parmi le ou les courriers électroniques déterminés susceptibles d'être différés, déterminer, par un processeur de suivi de courriers électroniques formé (244), un mode pour fournir une indication à l'utilisateur de donner suite au courrier électronique, déterminer une heure de rappel (312) pour l'indication et, pour chaque courrier électronique du ou des courriers électroniques déterminés susceptibles d'être différés, faisant qu'une indication spécifique au courrier électronique soit fournie à l'utilisateur à l'heure de rappel déterminée (312), le processeur de suivi de courrier électronique (244) ayant été formé en obtenant, à partir d'un ou plusieurs journaux de courrier électronique, journaux de calendrier et journaux de tâches, un type d'action et le moment où une action s'est produite sur des courriers électroniques précédemment différés.

15. Procédé selon la revendication 14, comprenant en outre la détermination qu'un courrier électronique (108, 110, 112) parmi le ou les courriers électroniques (108, 110, 112) doit être différé lorsque le courrier électronique (108, 110, 112) n'est pas lu.
